# EUROPEAN PATENT APPLICATION

(11) **EP 1 416 726 A1**
(43) Date of publication of application: **06.05.2004**
(21) Application number: 03256309.0
(22) Date of filing: 07.10.2003
(51) Int. Cl.: H04N 5/235

(54) **Cellular phone set with image sensing device**

(30) Priority: 11.10.2002 JP 2002298608
(71) Applicant: KONICA MINOLTA HOLDINGS, INC., Tokyo 100-0005 (JP)
(72) Inventor: Yamaguchi, Susumu, Hachioji-shi Tokyo (JP); Hoshino, Yasushi, Hachioji-shi Tokyo (JP); Takayama, Jun, Hachioji-shi Tokyo (JP); Hanabusa, Nobutaka, Hachioji-shi Tokyo (JP); Izumiya, Naoki, Hachioji-shi Tokyo (JP); Atarashi, Yuuichi, Hachioji-shi Tokyo (JP); Suzuki, Kazuhiko, Hachioji-shi Tokyo (JP)
(74) Representative: Nicholls, Michael John

(57) **Abstract**

This invention relates to a cellular phone set with an image sensing device having a light-emitting device. According to the cellular phone set of the invention, when the light-emitting device for emitting auxiliary light to an object to be photographed in photographing operation is to be charged, it is discriminated, in accordance with the state of the cellular phone set which is detected by various kinds of detection signals or operation signals, whether the light-emitting device is to be charged. If the cellular phone set satisfies a predetermined condition, the light-emitting device is charged. This makes it possible to efficiently charge the light-emitting device in accordance with a user's request, thereby allowing the user to use the light-emitting device without any standby time.

## Description

The present invention relates to a cellular phone set with an image sensing device having a light-emitting device and, more particularly, to a cellular phone set with an imaging sensing device which discriminates, in accordance with the state of the cellular phone set which is detected by various detection signals and operation signals, whether or not charging is to be performed, and charges a light-emitting device when a predetermined condition is satisfied.

Cellular phone sets with image sensing devices such as cameras have been recently proposed as communication terminals such as cellular phone systems and PHSs (Personal Handyphone systems) (to be generally referred to as "cellular phone sets" hereafter). As such a cellular phone set with an image sensing device, a cellular phone set is known, which has a light-emitting device for irradiating an object to be photographed with necessary light when, for example, the object is to be photographed in a dark place or the object which is dark due to backlight or the like is to be photographed.

As the above light-emitting device, for example, a know electronic flash unit is available. In order to cause the electron flash unit to emit light, a capacitor for charging the unit with necessary energy is required. The capacitor is charged by converting a voltage applied from a power supply into a high voltage through a converter circuit, supplying a current to a charging circuit, and accumulating electric charge in the capacitor. The charging of this capacitor requires several sec, and hence needs to be performed before photographing operation.

For example, the following electronic device is known (Japanese Unexamined Patent Publication No. 11-282062). Assume that a capacitor for an electronic flash device used as an auxiliary light source for photographing operation is to be charged in advance. In this case, when the communication state of the cellular phone set is checked, and it is determined that the phone set is engaged in communication or in preparation for communication, the capacitor is not charged. After the communication is over, the capacitor is charged.

When the capacitor is charged, a large current is switched. This may become a source for large noise. If noise due to the charging of the capacitor affects a radio signal, the signal quality deteriorates, and an incorrect signal may be transmitted.

A conventional method of charging a capacitor, however, is only configured to inhibit charging of the capacitor engaged in communication or in preparation for communication and charge the capacitor after the communication. This method does not charge the capacitor in association with the use of an electronic flash device. That is, a user may miss a photography chance if the capacitor is not completely charged when the user is to perform photographing operation, and the electronic flash cannot emit light without any standby time.

The Present invention has been made to solve the above problems in the prior art, and has as its object to provide a cellular phone set with an image sensing device having a light-emitting device, which charges the light-emitting device in accordance with a user's request to allow the user to use the light-emitting device without any standby time.

In order to achieve the above object, according to the first aspect of the present invention, there is provided a cellular phone set with an image sensing device, which includes an image sensing device which photographs an object to be photographed and a light-emitting device which emits light to the object, comprising a capacitor which accumulates light emission energy for making the light-emitting device emit light, a power supply section which supplies power to the capacitor, means for outputting a predetermined detection signal or operation signal for the cellular phone set, and power supply control means for controlling the power supply section to supply power to the capacitor, when the predetermined detection signal or operation signal is output.

In order to achieve the above object, according to the second aspect of the present invention, the cellular phone set with the image sensing device described in the first aspect further comprises an accumulated electric charge amount detecting section which detects an amount of light emission energy accumulated in the capacitor, and when the predetermined detection signal or operation signal is output, and the accumulated electric charge amount detecting section detects that the accumulated electric charge amount is not more than a reference value, the power supply control means controls the power supply section to supply power to the capacitor.

According to the third aspect of the present invention, the cellular phone set with the image sensing device described in the first or second aspect comprises a folding cellular phone set having two housings foldably coupled to each other through a hinge portion, and the predetermined detection signal is an unfolded state detection signal output from a body unfolded/folded state detecting section which detects an unfolded/folded state of the two housings.

According to the fourth aspect of the present invention, the cellular phone set with the image sensing device described in the first or second aspect includes an antenna withdrawably retracted in a retraction portion, and the predetermined detection signal is an antenna retracted state detection signal output from an antenna detecting section which detects a withdrawn state and retracted state of the antenna.

According to the fifth aspect of the present invention, in the cellular phone set with the image sensing device described in the first or second aspect, the predetermined operation signal is an operation signal for a photographing mode.

According to the sixth aspect of the present invention, in the cellular phone set with the image sensing device described in the first or second aspect, the predetermined operation signal is an operation signal for causing the image sensing device to perform photographing operation.

According to the seventh aspect of the present invention, in the cellular phone set with the image sensing device described in the first or second aspect, the predetermined detection signal is an external light amount detection signal which is not more than a reference value and output from a light amount detecting section which detects an external light amount.

According to the eighth aspect of the present invention, the cellular phone set with the image sensing device described in the first or second aspect includes an antenna which is withdrawably retracted in a retraction portion, and the predetermined detection signal is a radio field strength which is not more than a reference value and output from the radio field strength detecting section which detects a radio field strength of a radio signal transmitted/received to/from the antenna.

According to the ninth aspect of the present invention, the cellular phone set with the image sensing device described in the first or second aspect further comprises a display section and display control means for causing the display section to display an icon notifying that the light-emitting device is being charged, while power is supplied to the capacitor.

According to the tenth aspect of the present invention, the display section described in the ninth aspect comprises a backlight, and a light amount of the backlight is reduced by the display control means while power is supplied to the capacitor.

The first to tenth aspects of the present invention have the following advantages.

According to the first aspect, when preparations for the use of the cellular phone set are made, since charging of the capacitor is started, the light-emitting device is always set in a ready state concurrently with the use of the cellular phone set. This prevents the user from missing a good photography chance.

According to the second aspect, since power is supplied to the capacitor depending on the amount of light emission energy accumulated in the capacitor, efficient charging operation can be done. This can also prevent deterioration in light emission performance due to self-discharge of the capacitor.

According to the third aspect, supply of power to the capacitor is started when a predetermined operation instruction is input, thereby limiting the execution of charging operation in a situation unintended by the user. That is, charging operation can be done in accordance with the user's intention. In other words, when an instruction other than operation instructions associated with communication such as, for example, in a foldable cellular phone set, a detection signal indicating an unfolded state thereof is input as the above operation instruction, supply of power to the capacitor is started. This can prevent deterioration in the quality of a radio signal due to noise produced in charging operation.

According to the fourth aspect, supplying power to the capacitor after the antenna is retracted makes it possible to perform charging operation upon completion of communication. This can prevent a deterioration in the quality of a radio signal due to noise produced in charging operation.

According to the fifth aspect, when the photographing mode based on the photographing operation of the image sensing device is set, supply of power to the capacitor is started to perform efficient charging operation, thereby allowing the user to quickly perform photographing operation using the light-emitting device.

According to the sixth aspect, in addition to the advantage described in the fifth aspect, by starting supply of power to the capacitor immediately after photographing operation, the light-emitting device can be used, requiring the minimum standby time, even in continuous photographing operation.

According to the seventh aspect, if the amount of external light is detected in advance and the amount of light is insufficient, supply of power to the capacitor is started. This makes it possible to efficiently perform charging operation based on the use of the light-emitting device.

According to the eighth aspect, when the radio field strength becomes equal to or less than the reference value, it is discriminated whether communication has been completed or has failed, and supply of power to the capacitor is then started. This can prevent the execution of charging operation during communication and prevent a deterioration in the quality of a radio signal due to noise produced in charging operation.

According to the ninth aspect, in addition to the advantages described in any one of the first to eighth aspects, since the user can check on the display section whether the light-emitting device is being charged, the user can grasp the steps, and can quickly perform photographing operation upon completion of charging, thereby providing high convenience.

According to the 10th aspect, in addition to the advantages described in any one of the first to ninth aspects, when power is supplied to the capacitor, supply of power to other driving circuits is limited. This can prevent the inability of efficiently using the capacity of the power supply section due to an abrupt voltage drop of the power supply section when a larqe current is supplied from the power supply section at once.

The invention will be further described by way of example with reference to the accompanying drawings, in which:-
Figs. 1A and 1B are views both showing the outer arrangement of a cellular phone set according to an embodiment to which the present invention is applied, in which Fig. 1A shows an unfolded (open) state of the phone set body, and Fig. 1B shows a folded (closed) state of the phone set body;
Fig. 2 is a block diagram showing the functional arrangement of a cellular phone set 1 in Figs. 1A and 1B;
Figs. 3 to 8 are flow charts respectively showing charging control processes (1) to (6) executed by a control section 11 in Fig. 2; and
Fig. 9 is a view showing an example of a window displayed on a display section 13 in Fig. 2.

A preferred embodiment of the present invention will be described in detail below with reference to the accompanying drawings. Note, however, that the scope of the present invention is not limited to the embodiment shown in the drawings.

The correspondence between the constituent elements of a cellular phone set with an image sensing device claimed in the present application and those of a cellular phone set 1 with an image sensing device (to be briefly referred to as the "cellular phone set 1" hereinafter) according to this embodiment will be described clearly. A power supply control means and display control means claimed in the present application correspond to a control section 11 in this embodiment, and a display section claimed in the present application corresponds to a display section 13 in the embodiment. A radio field strength detecting section claimed in the present application corresponds to an antenna 141 of the cellular phone set in the embodiment. A light-emitting device claimed in the present application corresponds to an electronic flash section 16 in the embodiment. A capacitor claimed in the present application corresponds to a built-in capacitor incorporated in the electronic flash section 16 in the embodiment. An image sensing device claimed in the present application corresponds to a photographing section 17 in the embodiment. A power supply section claimed in the present application corresponds to a power supply section 18 in the embodiment. A body unfolded/folded state detecting section claimed in the present application corresponds to a body unfolded/folded state detecting section 19 in the embodiment. An antenna detecting section claimed in the present application corresponds to an antenna retraction detecting section 20 in the embodiment.

The arrangement of the cellular phone set 1 of this embodiment will be described first.

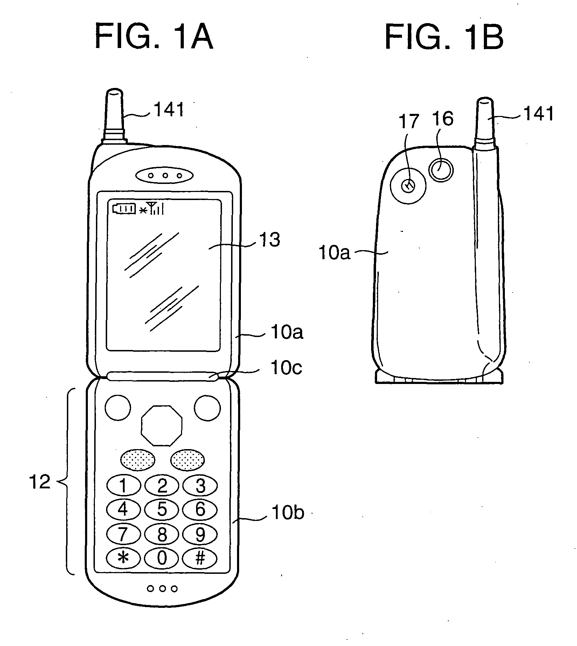

As shown in Figs. 1A and 1B, the cellular phone set 1 has a folding form in which first and second housings 10a and 10b are foldably coupled to each other through a coupling portion 10c having a hinge. Fig. 1A is a front view showing an unfolded state of the cellular phone set 1. Fig. 1B is a front view showing a folded state of the cellular phone set 1.

As shown in Fig. 1A, an input section 12 and the display section 13, which will be described later, are arranged on those surfaces of the cellular phone set 1 which are located inside when the phone set is folded (which surfaces will be referred to as "inner surfaces" hereinafter). As shown in Fig. 1B, the electronic flash section 16 and photographing section 17, which will be described later, are arranged on that surface of the cellular phone set 1 which is located outside when the phone set is folded (which surface will be referred to as a "rear surface" hereinafter). The antenna 141 is mounted. on an upper portion of the cellular phone set 1, and is retracted in a substantially cylindrical antenna hole (not shown) formed in the first housing 10a. Although not shown, the power supply section 18 such as a rechargeable pack is detachably mounted on the rear surface of the second housing 10b.

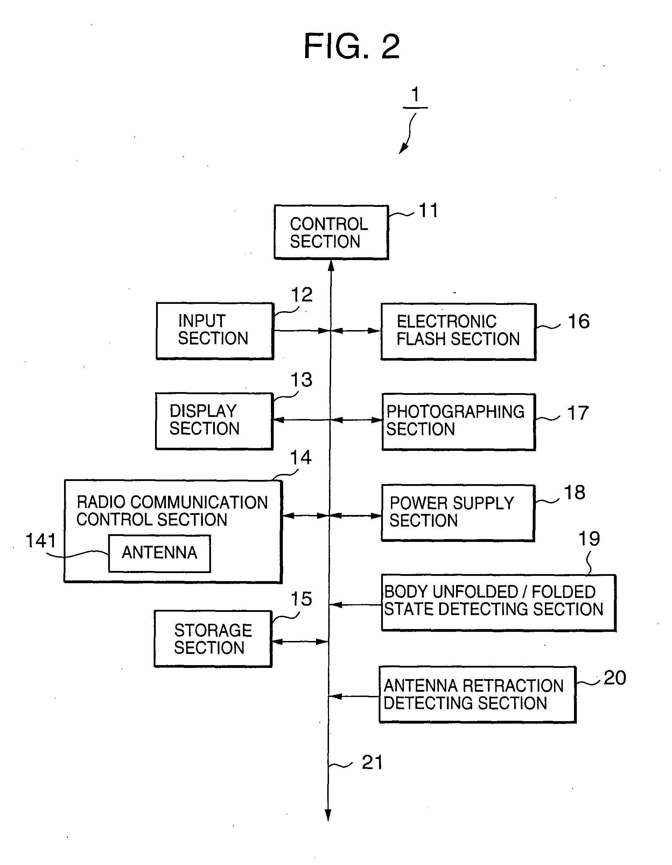

Fig. 2 is a block diagram showing the functional arrangement of the cellular phone set 1 in Figs. 1A and 1B. As shown in Fig. 2, the cellular phone set 1 is comprised of the control section 11, the input section 12, the display section 13, a radio communication control section 14, a storage section 15, the electronic flash section 16, the photographing section 17, the power supply section 18, the body unfolded/folded state detecting section 19, the antenna retraction detecting section 20, and the like. The respective sections are connected through a bus 21.

The control section 11 is comprised of a CPU (Central Processing Unit) 11a, a RAM (Random Access Memory) 11b formed from a rewritable semiconductor device, a ROM (Read Only Memory) 11c formed from nonvolatile semiconductor memory, and the like. The CPU 11a loads designated ones of various kinds of programs for the cellular phone set 1, which are recorded on the ROM 11c, into the work area of the RAM 11b, in accordance with various kinds of instructions input from the input section 12 or data input from the radio communication control section 14. The CPU 11a executes various kinds of processes in accordance with the above programs and these input instructions and input data. The CPU 11a then stores the processing results in a predetermined area in the RAM 11b and causes the display section 13 to display them.

The control section 11 reads out charging control process programs (1) to (6) stored in the ROM 11c, and executes charging control processes (1) to (6) (to be described later).

The function of the control section 11 which executes charging control processes (1) to (6) will be described below. Note that in the following processes, it is not always necessary to check the amount of electric charge accumulated in the capacitor.

### Charging Control Process (1):

Upon reception of a detection signal indicating a change in the state of the cellular phone set 1 to an unfolded state from the body unfolded/folded state detecting section 19, the control section 11 detects the amount of electric charge accumulated in the electronic flash section 16 and discriminates whether or not the amount of electric charge accumulated in the capacitor is equal to or less than a reference value (a reference amount of electric charge accumulated which is minimally required for flash emission). If the amount of electric charge accumulated in the capacitor is equal to or less than the reference value, the control section 11 controls the power supply section 18 to charge the electronic flash section 16.

### Charging Control Process (2):

When a photographing mode for photographing operation by the photographing section 17 is set by the switching mode key of the input section 12, and the corresponding operation signal is detected, the control section 11 discriminates the amount of electric charge accumulated in the capacitor. If the amount of electric charge accumulated in the capacitor is equal to or less than a reference value, the control section 11 charges the electronic flash section 16.

### Charging Control Process (3):

When the photographing mode is set, the control section 11 discriminates the amount of ambient light on the basis of a light detection signal input from the CCD or CMOS of the photographing section 17. If the amount of ambient light is equal to or less than a reference value (a reference light amount that is minimally required to obtain clear image data), the control section 11 starts charging the electronic flash section 16.

### Charging Control Process (4):

When the release switch of the input section 12 is pressed, and an operation signal indicating that photographing operation has been done is detected, the control section 11 checks the amount of electric charge accumulated in the capacitor, and starts charging the electronic flash section 16.

### Charging Control Process (5)

Upon reception of a detection signal indicating the retraction of the antenna from the antenna retraction detecting section 20, the control section 11 determines the completion of radio communication, and checks the amount of electric charge accumulated in the capacitor. The control section 11 then starts charging the electronic flash section 16.

### Charging Control Process (6):

The control section 11 discriminates the radio field strength of a radio signal input from the antenna 141. If the radio field strength of the radio signal is equal to or less than a reference value (a reference radio field strength that is minimally required for radio communication), the control section 11 determines the completion of radio communication, and checks the amount of electric charge accumulated in the capacitor. The control section 11 then starts charging the electronic flash section 16.

The input section 12 includes a ten-key pad, various functional switches, a mode switch for switching the communication mode and photographing mode, a release switch used when an image is to be photographed, and the like, and outputs press signals generated by various kinds of key operations to the CPU 11a.

The display section 13 is constituted by an LCD (Liquid Crystal Display) panel and the like, and displays on the screen on the basis of display data input from the control section 11. The display section 13 displays image data captured from the image sensing device of the photographing section 17 (to be described later) as a preview, and displays photographed image data.

The radio communication control section 14 includes the antenna 141 for transmission/reception of radio signals associated with termination/origination and the like to/from a radio base station (not shown). The radio communication control section 14 executes a cellular phone communication protocol corresponding to a communication scheme (e.g., W-CDMA or cdma2000) conforming to IMT-2000 between the cellular phone set and the radio base station in accordance with an instruction input from the control section 11. The radio communication control section 14 then executes transmission/reception of transmission/reception voice and data communication through a communication channel set in this communication scheme.

The storage section 15 stores various kinds of application programs communication processing programs for cellular phones which are executed by the control section 11, data processed by the processing programs, and the like. More specifically, the storage section 15 stores data such as image data photographed by the photographing section 17 and mail and HP (Home Page) received through the radio communication control section 14.

The electronic flash section 16 emits flash light to an object to be photographed upon adjusting the emission timing and amount. The electronic flash section 16 includes a capacitor (not shown) for accumulating electric charge for emitting flash light, a charging circuit (not shown) for charging the capacitor, and a light-emitting portion (not shown) formed from a xenon tube or the like. In the electronic flash section 16, a power supply voltage applied from the power supply section 18 is converted into a high voltage by a converter circuit to supply a current to the charging circuit, and electric charge which becomes light emission energy is accumulated in the capacitor.

The capacitor includes a sensor for detecting the amount of electric charge accumulated. A detection signal corresponding to the amount of electric charge accumulated which is detected by the sensor is output to the control section 11. When the capacitor is charged by this operation, and the amount of electric charge accumulated exceeds a reference value, the control section 11 performs control to stop charging. When, for example, the voltage becomes lower than a reference value upon self-discharge of the capacitor, supplementary charging is executed to compensate for self-discharge under the control of the control section 11. This makes it possible to keep the emission performance of the electronic flash device constant.

The photographing section 17 is constituted by an optical lens formed from glass or a plastic material and an image sensing device such as a CCD (Charge Coupled Device) or CMOS (Complementary Metal Oxide Semiconductor). The photographing section 17 converts an image input through the optical lens into an electric signal through the image sensing device and generates image data. The CCD or CMOS functions as an optical sensor for detecting the amount of ambient light, and outputs a detection signal corresponding to the amount of ambient light to the control section 11.

The power supply section 18 is constituted by, for example, a secondary battery such as a lithium battery, nickel battery, or NiCad battery. When the power switch is turned on, the power supply section 18 supplies, from the positive and negative terminals, power of a predetermined voltage to a driving circuit for driving each section of the cellular phone set 1, under the control of the control section 11.

When an unfolded/folded state of the cellular phone set 1 is detected by a mechanical switch (not shown) mounted on the coupling portion 10c, the body unfolded/folded state detecting section 19 outputs a detection signal corresponding to an unfolded/folded state to the control section 11.

The antenna retraction detecting section 20 detects withdrawal and retraction of the antenna through a mechanical switch (not shown) mounted in the substantially cylindrical antenna hole in the housing 10b, and outputs a detection signal corresponding to the state of the antenna to the control section 11.

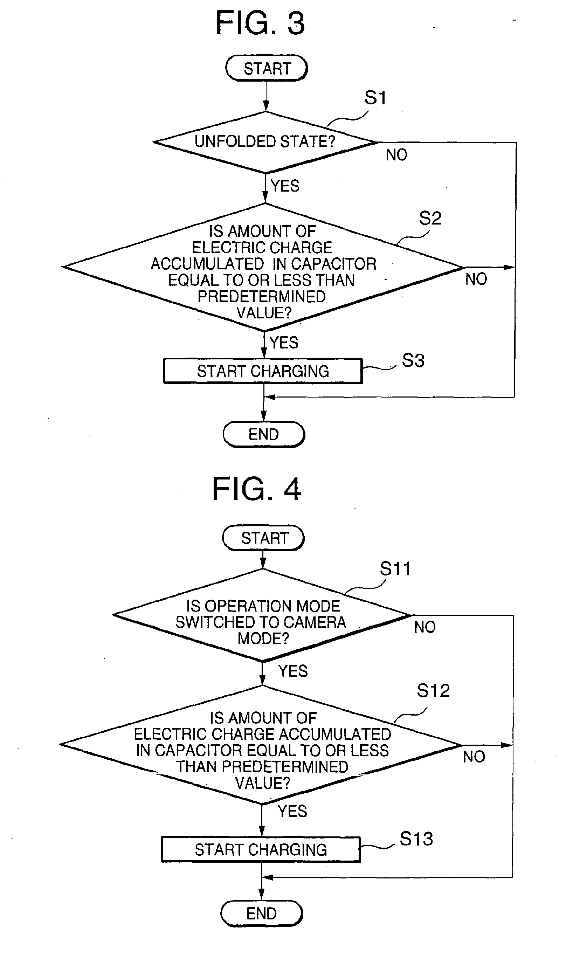

The operation of this embodiment will be described next with reference to the flow charts of Figs. 3 to 8.

The following description of operation is based on the premise that programs for implementing the respective processes written in the flow charts are stored in the ROM 11c in the form of program codes that can be read by the CPU 11a of the cellular phone set 1, and the CPU 11a sequentially executes operations based on the program codes.

As is obvious from the flow chart in Fig. 3 showing charging control process (1), upon reception of a detection signal, from the body unfolded/folded state detecting section 19, which indicates that the cellular phone set 1 has been unfolded (YES in step S1), the control section 11 discriminates, on the basis of a detection signal corresponding to the amount of electric charge accumulated in the capacitor which is input from the electronic flash section 16, whether or not the amount of electric charge accumulated in the capacitor is equal to or less than the reference value (step S2). If the amount of electric- charge accumulated in the capacitor is equal to or less than the reference value (YES in step S2), the control section 11 controls the power supply section 18 to start charging the capacitor of the electronic flash section 16 (step S3). Upon detecting, through the sensor mounted on the sensor, that the amount of electric charge accumulated becomes equal to or more than the reference value, the control section 11 stops charging, and terminates charging control process (1).

As is obvious from the flow chart of Fig. 4 showing charging control process (2), when the photographing mode is set by the mode switch of the input section 12 (YES in step S11), the control section 11 discriminates whether or not the amount of electric charge accumulated in the capacitor is equal to or less than the reference value (step S12). If the amount of electric charge accumulated in the capacitor is equal to or less than the reference value (YES in step S12), the control section 11 controls the power supply section 18 to start charging the capacitor (step S13). Upon detecting, through the sensor of the capacitor, that the amount of electric charge accumulated has become equal to or more than the reference value, the control section 11 stops charging, and terminates charging control process (2).

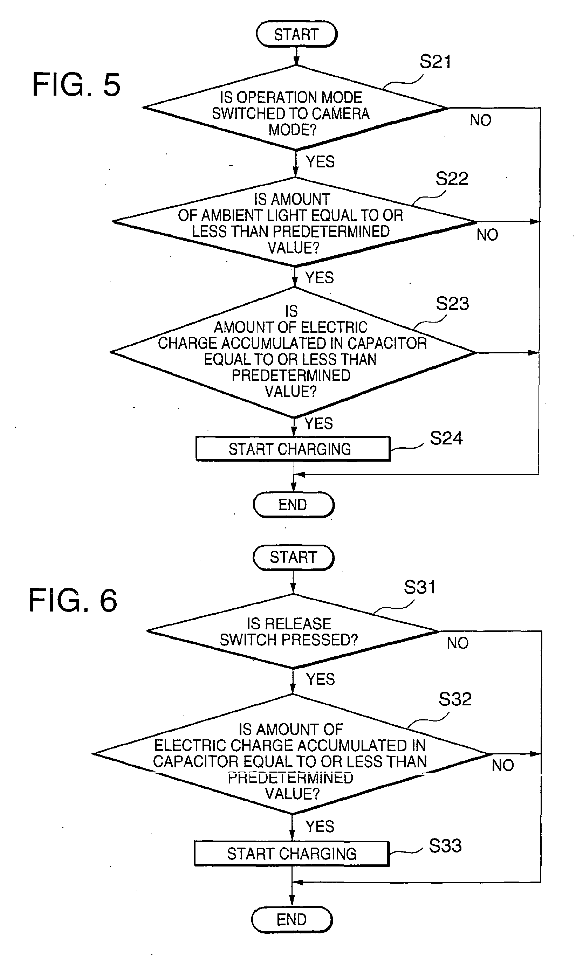

As is obvious from the flow chart of Fig. 5 showing charging control process (3), if the photographing mode is set by the mode switch of the input section 12 (YES in step S21), the control section 11 discriminates, on the basis of a light detection signal input from the CCD or CMOS of the photographing section 17, whether or not the amount of ambient light is equal to or less than the reference value (step S22). If the amount of ambient light is equal to or less than the reference value (YES in step S22), the control section 11 discriminates whether or not the amount of electric charge accumulated in the capacitor is equal to or less than the reference value (step S23). If the amount of electric charge accumulated in the capacitor is equal to or less than the reference value (YES in step S23), the control section 11 starts charging the capacitor (step S24). Upon detecting, through the sensor of the capacitor, that the amount of electric charge accumulated has become equal to or more than the reference value, the control section 11 stops charging, and terminates charging control process (3).

As is obvious from the flow chart of Fig. 6 showing charging control process (4), upon detecting that the release switch of the input section 12 is pressed, and photographing operation has been done (YES in step S31), the control section 11 discriminates whether or not the amount of electric charge accumulated in the capacitor is equal to or less than the reference value (step S32). If the amount of electric charge accumulated in the capacitor is equal to or less than the reference value (YES in step S32), the control section 11 starts charging the capacitor (step S33). Upon detecting, through the sensor of the capacitor, that the amount of electric charge accumulated has become equal to or more than the reference value, the control section 11 stops charging, and terminates charging control process (4) .

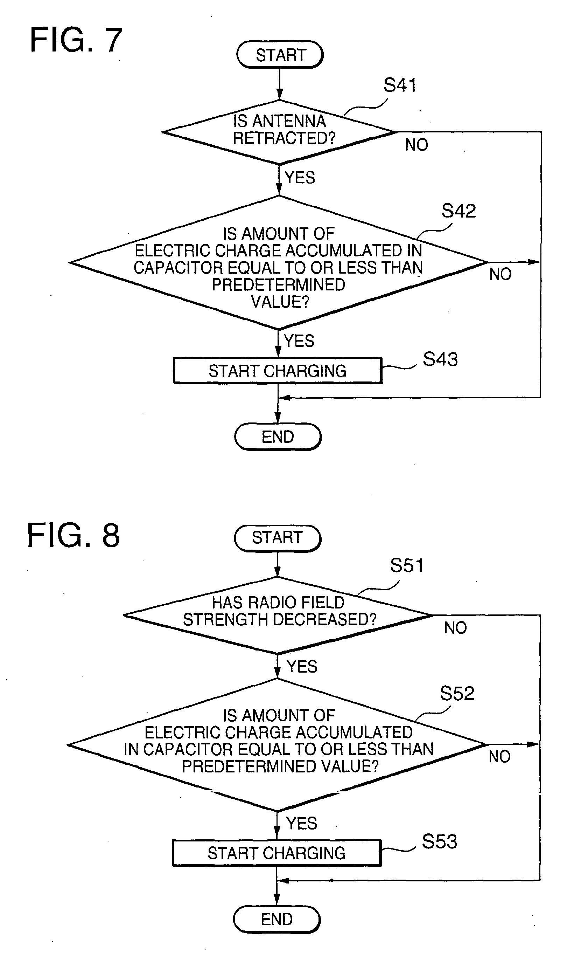

As is obvious from the flow chart of Fig. 7 showing charging control process (5), upon reception of a detecting signal indicating the retraction of the antenna from the antenna retraction detecting section 20 (YES in step S41), the control section 11 discriminates whether or not the amount of electric charge accumulated in the capacitor is equal to or less than the reference value (step S42). If the amount of electric charge accumulated in the capacitor is equal to or less than the reference value (YES in step S42), the control section 11 starts charging the capacitor (step S43). Upon detecting, through the sensor of the capacitor, that the amount of electric charge accumulated has become equal to or more than the reference value, the control section 11 stops charging, and terminates charging control process (5).

As is obvious from the flow chart of Fig. 8 showing charging control process (6), the control section 11 discriminates whether or not the radio field strength of a radio signal received through the antenna 141 has become equal to or less than a reference value (step S51). If the radio field strength has become equal to or less than the reference value (YES in step S51), the control section 11 discriminates whether or not the amount of electric charge accumulated in the capacitor is equal to or less than the reference value (step S52). If the amount of electric charge accumulated in the capacitor is equal to or less than the reference value (YES in step S52), the control section 11 starts charging the capacitor (step S53). Upon detecting, through the sensor of the capacitor, that the amount of electric charge accumulated has become equal to or more than the reference value, the control section 11 stops charging, and terminates charging control process (6).

As descried above, according to the cellular phone set 1 of this embodiment, when the electronic flash section 16 for emitting auxiliary light to an object to be photographed in photographing operation is to be charged, it is discriminated, in accordance with the state of the cellular phone set 1 which is detected by various kinds of detection signals and operation signals, whether charging should be performed. If a predetermined condition is satisfied, the electronic flash section 16 is charged. This makes it possible to efficiently charge the electronic flash section 16. For example, by detecting setting of the photographing mode, the amount of ambient light, pressing of the release switch, or the like, the electronic flash section 16 can be charged on the assumption that the electronic flash section 16 is to be used. This allows the user to photograph without waiting for any charging time for that operation. Therefore, the user will miss no good photography chance.

In addition, since charging is started in accordance with antenna retracting operation or a decrease in the radio field strength of a radio signal during reception, charging operation during radio communication can be prevented, thereby preventing a deterioration in the quality of a radio signal during reception. Furthermore, since the amount of electric charge accumulated in the capacitor is detected, and charging control is performed in accordance with the amount of electric charge accumulated, unnecessary charging can be prevented, and a deterioration in emission performance due to self-discharge of the capacitor can be prevented.

Note that the description of this embodiment is a preferred example of the cellular phone set 1 of the present invention, and the present invention is not limited to this.

The cellular phone set 1 in this embodiment has been described as a foldable cellular phone. However, the present invention is not limited to this and can be applied to a cellular phone in a form other than the folding form. In addition, the electronic flash section 16 and photographing section 17 are arranged on the rear surface of the cellular phone set 1. However, they may be arranged on the inner surface of the cellular phone set 1.

In this embodiment, when, for example, the release switch is pressed, the charging of the electronic flash section 16 is started. However, the present invention is not limited to this. The charging of the electronic flash section 16 may be started when photographing operation is to be performed using the electronic flash section 16. Alternatively, the charging of the electronic flash section 16 may be started when a predetermined switch of the input section 12 is pressed. In this case, for example, when a switch other than the switches associated with communication is operated as the predetermined switch, the electronic flash section 16 is charged. This can prevent a deterioration in the quality of a radio signal due to noise produced in charging operation.

As a method of starting charging operation based on user's intentional operation, a method of starting charging operation when the antenna is withdrawn may be used. This allows the user to charge the electronic flash section 16 by reliable operation.

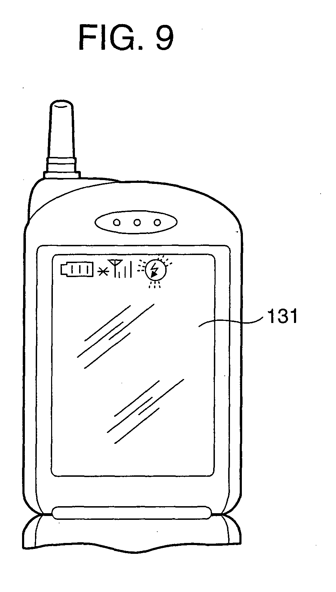

As shown in Fig. 9, an electronic flash icon is preferably lighted up or flickered on a display screen 131 to notify the user that charging operation is in progress. Furthermore, the amount of light emitted by a backlight (not shown) provided for the display section 13 may be reduced during charging operation. In charging the electronic flash section 16, limiting the supply of power to other circuits will prevent the inability of efficiently using the capacity of the battery due to an abrupt voltage drop of the battery when a large current is supplied from the battery at once.

Power supply control processes (1) to (6) described above may be executed in accordance with user's settings. This makes it possible to execute charging operation when the user determines that the execution of charging operation is preferable, and vice versa. Therefore, charging control can be done in accordance with the application purpose of the user, thereby providing the cellular phone set 1 with high convenience.

The detailed arrangement and detailed operation of the cellular phone set 1 according to this embodiment can be properly changed within the sprit and scope of the invention.

## Claims

1. A cellular phone set with an image sensing device, which includes an image sensing device which photographs an object to be photographed and a light-emitting device which emits light to the object, comprising:
a capacitor which accumulates light emission energy for making the light-emitting device emit light;
a power supply section which supplies power to said capacitor;
means for outputting a predetermined detection signal or operation signal for said cellular phone set; and
power supply control means for controlling said power supply section to supply power to said capacitor, when the predetermined detection signal or operation signal is output.

2. A phone set according to claim 1, wherein said cellular phone set further comprises an accumulated electric charge amount detecting section which detects an amount of light emission energy accumulated in said capacitor, and when the predetermined detection signal or operation signal is output, and said accumulated electric charge amount detecting section detects that the accumulated electric charge amount is not more than a reference value, said power supply control means controls said power supply section to supply power to said capacitor.

3. A phone set according to claim 1 or 2, wherein said cellular phone set comprises a folding cellular phone set having two housings foldably coupled to each other through a hinge portion, and the predetermined detection signal is an unfolded state detection signal output from a body unfolded/folded state detecting section which detects an unfolded/folded state of the two housings.

4. A phone set according to claim 1, 2 or 3 wherein said cellular phone set includes an antenna which is retractable into a retraction portion, and the predetermined detection signal is an antenna retracted state detection signal output from an antenna detecting section which detects a deployed state and retracted state of the antenna.

5. A phone set according to claim 1, 2, 3 or 4 wherein the predetermined operation signal is an operation signal for a photographing mode.

6. A phone set according to claim 1, 2, 3 or 4 wherein the predetermined operation signal is an operation signal for causing the image sensing device to perform photographing operation.

7. A phone set according to claim 1 or 2, wherein the predetermined detection signal is an external light amount detection signal output from a light amount detecting section indicating that an external light amount is not more than a reference value.

8. A phone set according to claim 1 or 2, wherein said cellular phone set includes an antenna which is retractable into a retraction portion, and the predetermined detection signal is that a detected radio field strength output from a radio field strength detecting section which detects a radio field strength of a radio signal transmitted/received to/from the antenna is not more than a reference value.

9. A phone set according to any one of the preceding claims, further comprising a display section and display control means for causing said display section to display an icon notifying that the light-emitting device is being charged, while power is supplied to said capacitor.

10. A phone set according to claim 9, wherein said display section comprises a backlight, and a light amount of the backlight is reduced by said display control means while power is supplied to said capacitor.
